# EUROPEAN PATENT APPLICATION

(11) **EP 0 943 984 A2**
(43) Date of publication of application: **22.09.1999**
(21) Application number: 99102397.9
(22) Date of filing: 08.02.1999
(51) Int. Cl.: G06F 3/12

(54) **Cover page client and server**

(30) Priority: 20.03.1998 US 45019
(71) Applicant: Xerox Corporation, Rochester, New York 14644 (US)
(72) Inventor: Goldberg, David, Palo Alto California 94301 (US); Weiser, Mark D., Palo Alto California 94301 (US); Want, Roy, SantaClara California 95051 (US); LaMarca, Anthony George, Redwood City California 94061 (US); Atkinson, Russel R., Aptos California 95003 (US)
(74) Representative: Grünecker, Kinkeldey, Stockmair & Schwanhäusser Anwaltssozietät

(57) **Abstract**

A document generating method and system is provided for autonomous selection and communication of information drawn from a varying data stream, keyed by a set of predetermined subjects corresponding to a parameter profile. An original set of predetermined subjects is selected comprised of contents which are updated over time to comprise the varying data stream. A user selects a subset of the original set to form a parameter profile. Incidental to the user generating a first document, a second document is generated comprised of data segments extracted from the subset. The first and second documents are associated and contemporaneously communicated to the user. Preferably, the subject invention is applicable to printed documents and the associating comprises identifying a white space within the first document and disposing the second document within that white space.

## Description

### Background of the Invention

The subject invention relates to the art of document generation systems, and particularly to the association of related documents based upon utilization of white space availability in a first document for including a second document.

The invention is more particularly applicable to printed paper documents produced by a network printer system, wherein satellite printers are accessible over a network. However, the subject invention is applicable to any system which provides routine generation of a document, either printed or electronically, that presents an opportunity for the addition or insertion of a second document for communicating current information deemed useful to a user.

The idea of publishing information on previously white space (grocery store bags, milk cartons, etc.) is not new. What is new about the present invention is that the information (1) is intended for serendipitous information browsing and (2) is under the control of the receiver, not the sender.

The dramatic explosion of the World Wide Web has brought renewed interest to the question of browsing end finding information from a large database. The overwhelming amount of information available on the Web has diminished the efficiency and desirability of such browsing. Recently, there has been much interest in 'push" systems, which filter and organize content and deliver it directly to users. This is in contrast to "pull" systems, such as web browsers, which require that users take action themselves to retrieve data.

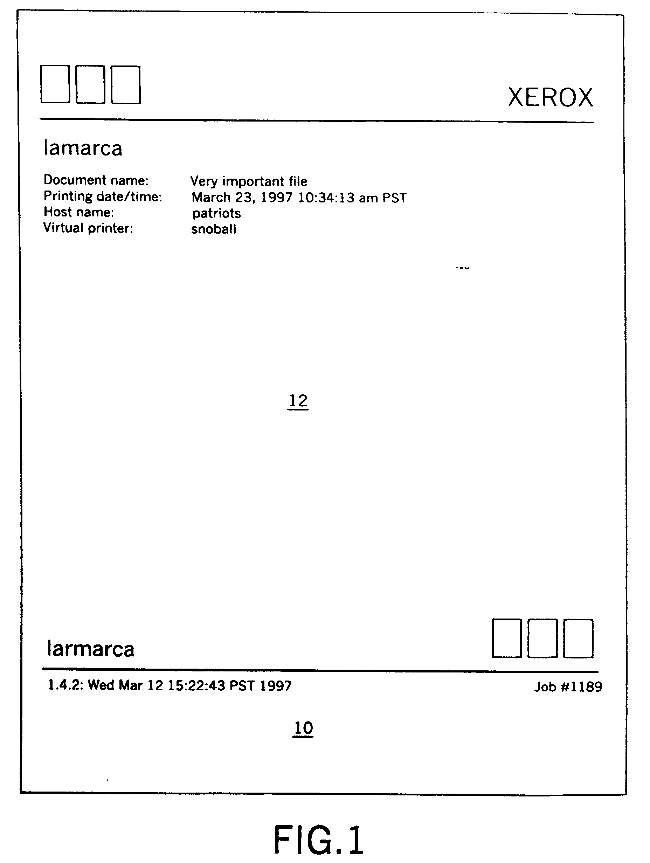

Most medium to large office word processing systems will employ a printer network controlled by a centralized server. Since the system printers are accessible and used by a large number of individual users, any particular print job is best to be distinguished by a cover page indicating the name of the user, the date and other information. Mere presentation of this information will leave the cover page mostly blank (see FIGURE 1). Accordingly, conventional cover pages of a print job present an opportunity to use the "white space" on the blank cover sheets to utilize a push system for the delivery of customized information to printer users. In such a system, certain system aspects had to be considered as important design features; first, providing customized content on the printer cover sheets; second, maintaining profile information on a per user basis; third, be customizable so that users can add their own content to the system in an easy way; fourth, be low maintenance and have content gathered automatically by programs designed to harvest information from the World Wide Web and other on-line information sources; and, fifth, be fun to use while adding some serendipity to the computing infrastructure.

Using printer cover sheets as the vehicle for delivery of harvested information is based upon an awareness that most people are still more comfortable with printed paper for pure reading than computer displays. However, the convenience of paper and its ready conveyance or disposition, still must be balanced by a sensitivity to the use of white space as a reliable conveyance vehicle, as users do not always pickup their printer jobs, nor should sensitive personal data be communicated on a cover page which is readily accessible to anyone passing a subject printer during a printer job. Accordingly, the subject system provides a very useful vehicle for delivering general, publicly or privately available content, that is of predesignated interest to the users. Every now and then, users will be surprised and delighted with something found to be really useful, that was not especially selected or expected. In this way, such systems can be an experiment in serendipitous computing.

The present invention contemplates a new and improved push system, primarily paper based, which provides improved benefits to users. The system is simple in design, economical to install, readily adaptable to a plurality of document generating systems and provides current information, predetermined by subject matter, in a useful and convenient way to a user.

### Brief Summary of the Invention

In accordance with the present invention, there is provided a document generating method for autonomous selection and communication of information drawn from a varying data stream, keyed by a set of subjects within a preset parameter profile. The method comprises selecting an original set of the predetermined subjects comprised of contents which are updated over time to comprise the varying data stream. A subset of the original set is selected in accordance with user instructions, wherein the subset comprises the parameter profile. Incidental to the user generating a first document, a second document is generated comprised of data segments extracted from the subset. The first and second documents are associated and contemporaneously communicated to the user.

In accordance with another aspect of the present invention, the first document comprises a printer job having a cover page identifying the user. The cover page has white space, and the associating comprises disposing the second document within the white space of the cover page.

In accordance with a more limited aspect of the present invention, the data segments are harvested from the World Wide Web and stored in a server controlling the document generation until they can be utilized when the user generates the first document.

In accordance with yet another more limited aspect of the present invention, the user selecting the subset includes relative weighting of items within the subset in accordance with an expression of user preference of appearance. In addition, a record of the data segments that are already communicated to the user is maintained to avoid repetitive communication of such segments to the user.

One benefit obtained from the subject invention is a customizable push system in that users can generally adjust what content is presented, yet can be pleased or surprised with what is actually received at irregular sampling intervals.

Another benefit obtained from the subject invention is that the system runs largely unattended and harvests the majority of its content from the World Wide Web.

Yet another benefit of the subject invention is improved utilization of a document having a white space, like a print job cover page, by the insertion therein of information by subject matter deemed desirable or useful to the user.

Other benefits and advantages of the subject new document generating method will become apparent to those skilled in the art upon a reading and understanding of the specification.

### Brief Description of the Drawings

The invention may take physical form in certain parts and steps, and arrangements of parts and steps, the preferred and alternative embodiments of which will be described in detail in the specification and illustrated in the accompanying drawings which form a part hereof and wherein:
FIGURE 1 is an exemplar of a conventional cover page for a printer job;
FIGURE 2 is an exemplar of another cover page in which the white space has been utilized to convey information in the form of a second document having a content of interest to the user;
FIGURE 3 is block diagram of an architecture of a system formed in accordance with the present invention;
FIGURE 4 is an exemplar portion of a web page accessible to a user of the subject invention for setting a user profile of desired information;
FIGURE 5 is a flow chart for a printer operation; and,
FIGURE 6 is a flow chart for a server operation in accordance with the present invention.

### Detailed Description of the Preferred and Alternative Embodiments of the Invention

Referring now to the drawings, wherein the showings are for purposes of illustrating the preferred and alternative embodiments of the invention only, and not for purposes of limiting same, FIGURE 1 shows an exemplar of a cover page 10 of a print job to distinguish the print job from others that may be resting in an output tray of a printer or copier machine. The example includes the name of the user, "LaMarca"; the date, "March 23, 1997"; and other information relevant to the document printing system involved. Of importance in FIGURE 1 is that a portion of the cover page **10** is comprised of blank "white space" **12**. Keeping in mind that there is very little need for indicia to distinguish one printer job from another, cover pages will frequently have such large amounts of white space.

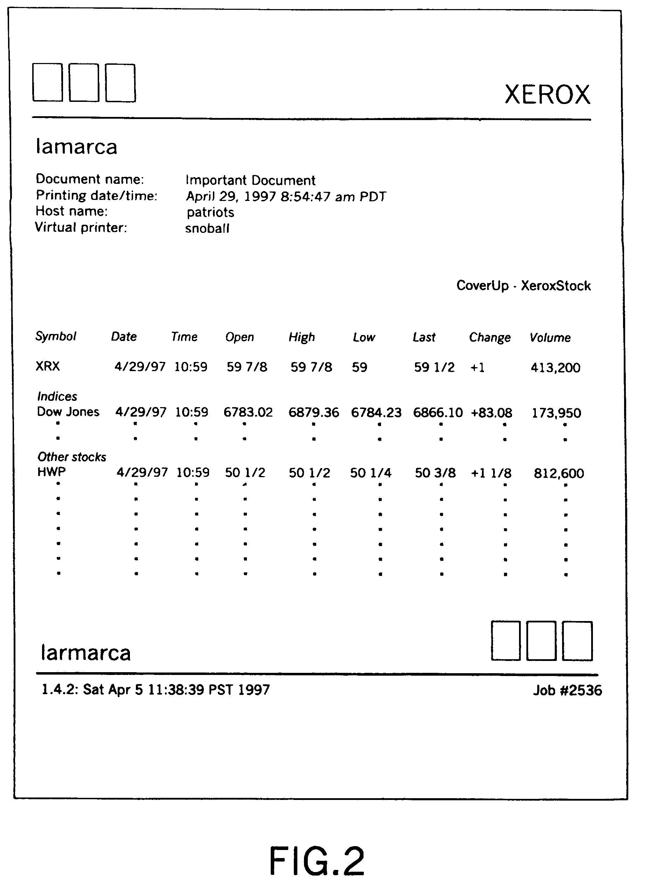

A piece of content that can be disposed within the white space **12** is simply an image that might hold text, graphics, or both. FIGURE 2 is an exemplar where the white space has been filled in with stock prices of interest to the user. Since all such content is not of interest to all users, each piece of content may be categorized into a content group. This enables users to customize what they receive at a group level. For example, of all the information that can be drawn from varying data streams available on the World Wide Web, predetermined subjects can be categorized and harvested from the Web. One example of several content groups could comprise cartoons, puzzles, stock quotes, weather forecasts, talk schedules, net news articles, and newspaper stories. Pieces of content within a certain group are harvested and delivered to users in accordance with a user selected preferential order. The extracted data segments comprising the content are stored in the server and printed or displayed in association with a document display or printer job going to the user. The system stores a record of the data segments conveyed to the user to avoid repetitive communication of such segments.

More particularly, every time a user sends a job to a printer in the system, one of the selected groups is chosen randomly from a set of user supplied groups and the next unseen piece of content from that group is printed on their cover sheet.

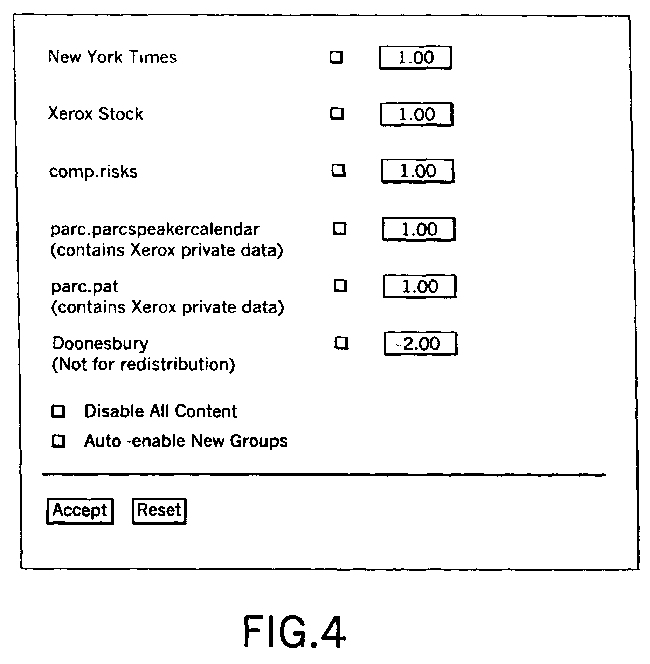

Each user has a profile (FIGURE 4), which contains the available list of groups to which a user can subscribe. In addition, the system provides a default profile if the user elects not to select a personal profile. If a user never edits the profile, he will always receive contents selected from the groups in the default profile.

As can be seen with reference to FIGURE 4, users can edit the profile via a web page associated with the system. For each content group, users have the option of subscribing or not. If the group is not subscribed, it will never be delivered to a cover sheet.

To provide a finer grade control, each subscribed group is given a weight that can be adjusted to control which groups are to be seen more often. A group of weight "2", for example, is twice as likely to be seen as a group of weight "1". To accommodate those not interested in the system, the profile editor provides an option to turn off ("disable") all content.

The system is extendable and accordingly it is very easy to add new content groups. When new groups are created, an option is available whether new groups should be added automatically to a subscription. To determine this, the system provides an "auto enable new groups" selector to enable new group subscription.

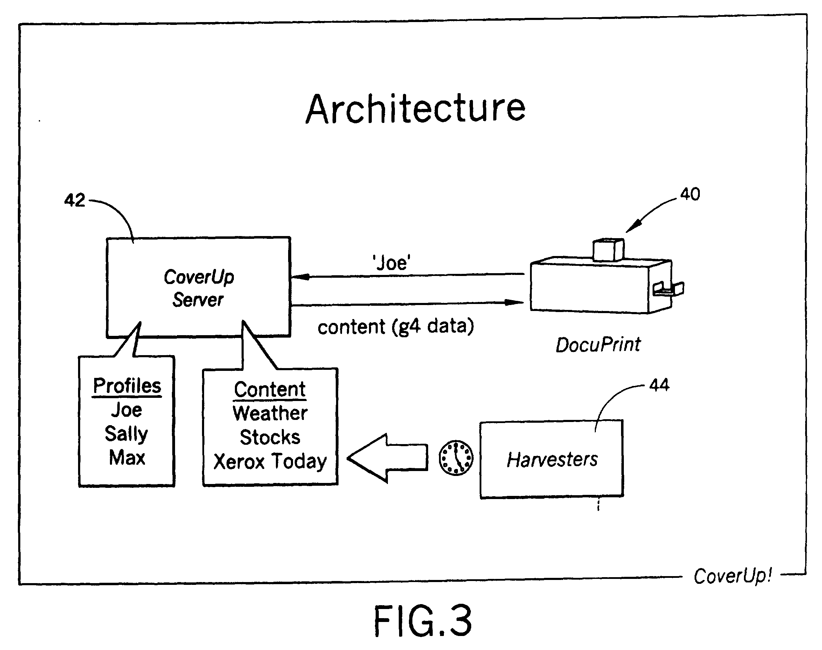

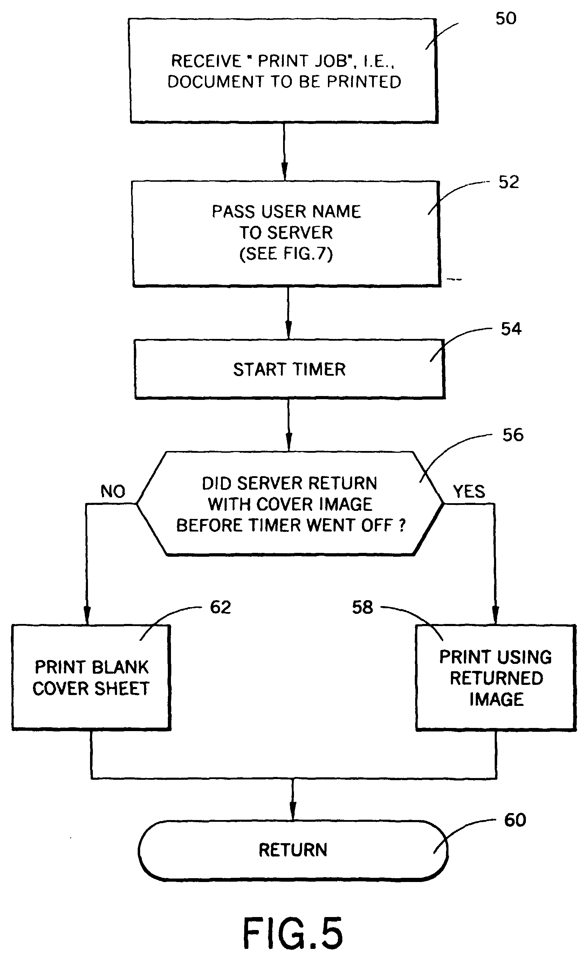

With particular reference to FIGURE 3 and the flow chart of FIGURE 5, the architecture and method of a system formed in accordance with the present invention is illustrated. Although not limited thereto, the system preferably entails large network printers driven by a programmable processor. A common goal of a system such as this is to minimize the changes made to the printer software. The subject invention allows for successful implementation of this design goal and will usually only require addition of a couple dozen lines of code.

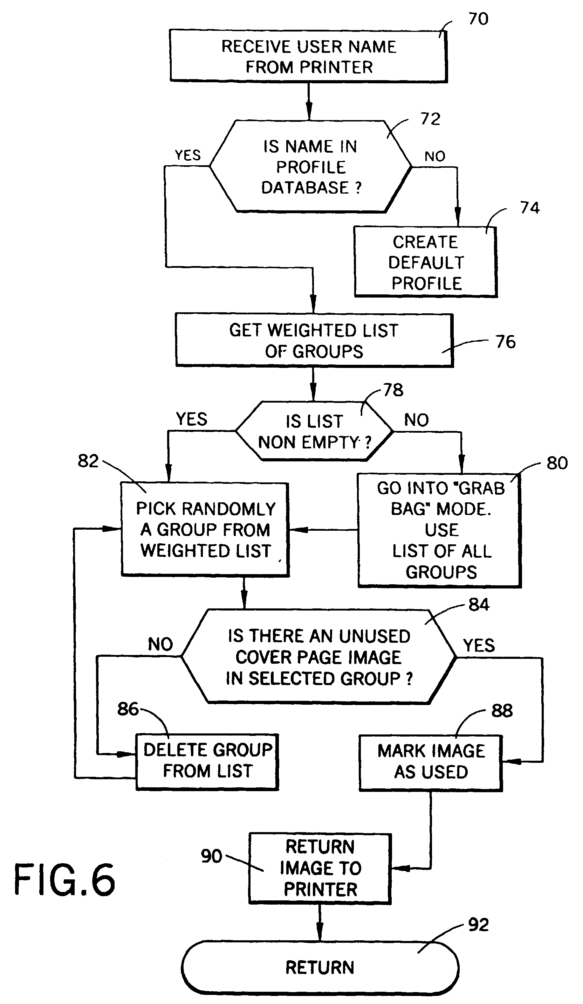

With particular reference to FIGURES 5 and 6, flow charts illustrating the printer and server operation are detailed. First with reference to FIGURE 5, the printer will initially receive a "print job" **50**. Such a print job is at least comprised of the document to be printed and identification of the user for the job. The printer then passes **52** the user name to the server and starts a timer **54** for a time period, for example one second, timing the period during which the server should return a cover image. At the termination of the timeout period, the printer will determine **65** whether the server has returned a cover image to the printer before the timer went off. If an appropriate cover image is returned, then the job is printed **58** using the returned image and the printer returns to a wait state **60**; however, if the timeout period elapses without a return of a cover image from the server, then the printer will merely print **62** a conventional blank cover sheet.

With particular reference to FIGURE 6, the server flow chart illustrating the operational steps for the server shows that the subject method is initiated by the server receiving **70** a user name from the printer and checking **72** whether that name is presently stored in a profile database. If there is no profile for the particular print job, presumably it is because it is the first time that the user has implemented a print job and, therefore, the system will create **74** a default file. Thus the user will now either have the default profile or one that was previously created.

The profile is comprised of a weighted list of groups which are obtained **76** from the profile storage. The system determines whether the list is empty **78**, and if so, it will enter **80** the grab-bag mode, comprising a random collection search and the system will then pick **82** from the grab-bag. If the list is non-empty, then a random group of items for printing on the cover page is picked from the non-empty weighted list. The list will be empty, for example, if the user selected only a cover page "weather" printout for each day, and had already had an occasion to print the weather that day. Then, for a second print job, the list would be empty for that user and the system would go into the grab-bag mode. In other words, for the grab-bag mode to occur, all the content from all the selected groups has already been used. The group that is picked is selected pursuant to a weighted distribution, not a uniform randomness, so that whatever group is printed will adhere to the preferences identified in the user's profile. After the group has been selected, the system will check whether the cover page is comprised of pages that have already been used in previous print jobs. In order to avoid repetition, such items will be deleted **86** from the group for printing and the system will then return to picking **78** another group from the weighted list. Eventually the system will identify an unused cover page for printing which is then marked as used **88** and the server returns **90** an image to the printer for completion of the print job and then returns **92** to a wait state for the next print job.

The system also includes program components, called harvesters **44**, which automatically generate the data segments referred to herein as content. While harvesters are well known and vary widely in the resources they use and the content they create, they are all run on a periodic basis and are expected to install content in its final image format in the subject system's content directories. While most harvesters gather content from the World Wide Web, it is within the scope of the subject invention to employ some that gather from other sources (for example, an internal talk calendar for the company) Most harvesters are run on a daily basis. The most frequently run harvesters are for weather forecasts and stock quotes, started every two hours. The least frequently run harvesters are for local community event calendars, which are only updated once a month.

The system envisions increased ease for users to add their own content groups to the system. To this end, high level building blocks (not shown) for constructing harvesters are provided. The system includes a set of programs for fetching content from the Web and for directly installing content into the proper group.

An important aspect of content management is deciding when to discard content. A program called "The Expirer" handles this job. For each group, "The Expirer" is given both a maximum content age, as well as a maximum amount of content. When content exceeds the maximum age, it is removed. When the maximum amount of content is exceeded, content is removed from oldest to youngest, until the situation is resolved. Such age and quantity limits are usually advantageous to properly express what is wanted by users. Weather forecasts, for example, are not likely of interest the next day. At the same time, there should never be more than one weather forecast, even if they are all less then twenty four hours old. Cartoons, on the other hand, have a timeless quality, and the only real concern is keeping storage space reasonable. Accordingly, cartoons are preferably assigned no time out value and are limited only in the amount of content.

A drawback with the preferred embodiment is that users read information on paper, but have to go to their workstations to edit the profile that controls what information they see. One extension would be to use a paper user interface for modifying profiles. Next to the printer would be a "smart recycling bin", into which cover pages would be discarded. The smart recycling bin could be a scanner, or simply a receptacle from which an attendant periodically collected output that could be fed through a scanner located elsewhere. In one possible interface, if a user marked an X through an article before recycling, that would be interpreted that the content group should be deleted from the user's profile.

An obvious extension to the preferred embodiment is to use it for fax cover sheets, in addition to printer cover sheets. This can be generalized by noting that the harvesters (the background processes that gather information from the World Wide Web) are obtaining information that isn't vital to work, but is instead serendipitous in nature. This makes it a good match for media intended to be perceived using peripheral awareness. These considerations suggest many other uses for information from the harvesters. They could be displayed on exercise equipment in the company gym or converted to speech and played while waiting on the telephone, etc.

A final possible extension of the preferred embodiment would be a customizable newsletter. Rather than printing on cover sheets, the content could be printed as a newsletter and distributed throughout the company (by the usual interoffice mail delivery, for example). When combined with a paper user interface, this would be a paper analogue of the online customizable newspaper. Online customizable newspapers are becoming prevalent, and there are both research and commercial examples. The many advantages of reading on paper compared to displays are well known. Adding a paper user interface gives the reader the ability to interactively update their profile while reading in the preferred media.

Other scenarios are also possible in any environment satisfying the circumstance where (1) the push information gathered by harvesters is printed for presentation to the user (2) at a time when the user is conveniently free to read it.

The invention has been described with reference to preferred embodiments, obviously modifications and alterations will occur to others upon a reading and understanding of the specification. It is our intention to include all such modifications and alterations in so far as they come within the scope of the appended claims or the equivalents thereof.

## Claims

1. A print system for selective identification and communication of information on a document white space comprising:
a printer for generating a document;
a printer server for controlling printer operation including:
means for identifying a document white space of a printing job and a user of the printer,
means for storing a profile by subject of information desired by the user, and
means for linking the printer server to a source of the information; and,
means for printing selected information corresponding to subjects in the profile of the user in the document white space.

2. The print system as defined in claim 1 wherein the printer server further includes a content memory storing a predetermined group of information from which the desired information is selected.

3. The print system as defined in claim 2 wherein a harvester is linked to the printer server for collecting the predetermined group of information.

4. The print system as defined in claim 1 wherein the printer server is networked to a plurality of users, each having a distinct profile.

5. The print system as defined in claim 1 further including an editor for editing the profile by the user.

6. A document generating method for autonomous selection and communication of information drawn from a varying data stream keyed by a set of predetermined subjects corresponding to a parameter profile, including:
selecting an original set of the predetermined subjects comprised of contents which are updated over time to comprise the varying data stream;
selecting a subset of the original set in accordance with user instructions wherein the subset comprises the parameter profile;
incidental to the user generating a first document, generating a second document comprised of data segments extracted from the subset;
associating the first and second documents; and,
contemporaneously communicating the first and second documents to the user.

7. The document generating method as claimed in claim 6 wherein the documents are printed and the associating comprises identifying a white space within the first document and disposing the second document within the white space.

8. The document generating method as claimed in claim 7 wherein the first document comprises a printer job having a cover page identifying the user and the associating comprises disposing the second document within the white space of the cover page.

9. The document generating method as claimed in claim 7 wherein a user amends the profile by editing the printed document.

10. The document generating method as claimed in claim 6 further including harvesting said data segments from the predetermined set and storing said data segments in a server utilized in the user generating of the first document.
